(19) Europäisches Patentamt
European Patent Office
Office européen des brevets

(11) Publication number: **0 135 997**
**B1**

(12) **EUROPEAN PATENT SPECIFICATION**

(45) Date of publication of patent specification: **16.09.87**

(51) Int. Cl.$^4$: **E 02 B 3/22**

(21) Application number: **84304818.2**

(22) Date of filing: **13.07.84**

(54) **Marine fender.**

(30) Priority: **22.08.83 JP 151485/83**

(43) Date of publication of application:
**03.04.85 Bulletin 85/14**

(45) Publication of the grant of the patent:
**16.09.87 Bulletin 87/38**

(84) Designated Contracting States:
**DE FR GB IT NL**

(58) References cited:
**FR-A-2 388 947**
**FR-A-2 441 683**
**FR-A-2 492 930**
**FR-A-2 523 611**

(73) Proprietor: **Bridgestone Corporation**
**10-1, Kyobashi 1-Chome Chuo-Ku**
**Tokyo 104 (JP)**

(72) Inventor: **Tagomori, Satoshi**
**1082-1, Kanai-Cho Totsuka-Ku**
**Yokohama City Kanagawa Pref. (JP)**
Inventor: **Uruta, Hisaya**
**13-9, Nishigahara 3-Chome**
**Shibuya-Ku Tokyo (JP)**

(74) Representative: **Whalley, Kevin et al**
**MARKS & CLERK 57/60 Lincoln's Inn Fields**
**London WC2A 3LS (GB)**

**EP 0 135 997 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to a marine fender, for buffering or absorbing impacts or shocks of vessels and offshore structures in harbours or on the sea.

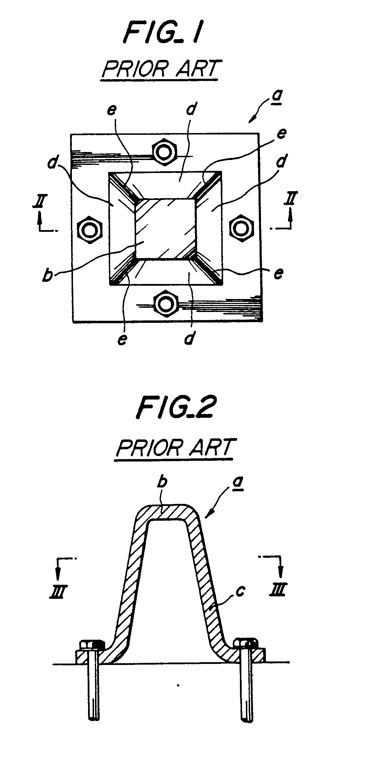

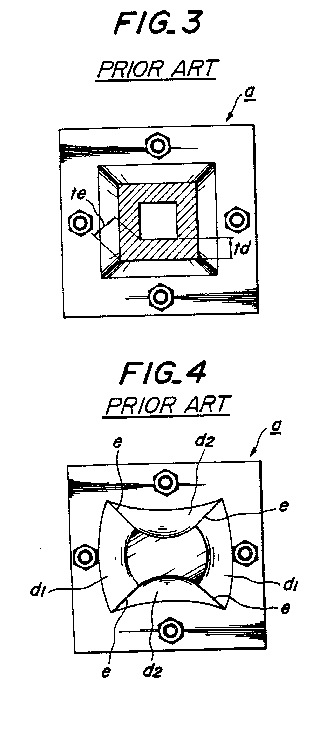

In the conventional marine fender *a*, as shown in Figs. 1 to 4 of the accompanying drawings wherein Fig. 1 is a plan view of the conventional marine fender, Fig. 2 is a longitudinal sectional view taken along the line II—II in Fig. 1, Fig. 3 is a transverse sectional view taken along the line III—III in Fig. 2, and Fig. 4 is a plan view illustrating the compressed state of Fig. 1, a shock receiving portion *b* of a square plate type is integrally united at its outer periphery with the upper peripheral edge of a support portion *c* in the form of a hollow pyramid frustum, and this support portion *c* has an approximately constant thickness and its walls have a certain inclination as shown in Fig. 2.

During the berthing of a vessel, therefore, the dynamic phenomenon of the marine fender *a* applied to compressive force is as follows.

When the thicknesses of a support flat portion *d* and a support corner portion *e* are td and te respectively, as shown in Fig. 3, geometrical moments of inertia Id and Ie in the portions *d* and *e* are proportional to the cubes of the thicknesses td and te respectively.

Now, when a compressive force P is applied to the marine fender *a*, if the compressive force P is relatively small, both the shock receiving portion *b* and the support portion *c* undergo elastic deformation, while if the compressive force P is large and exceeds a buckling load Pc, the support portion *c* undergoes buckling deformation. Moreover, the buckling load Pc is represented by the following equation:

$$Pc = k.\frac{EI}{l^2} \quad (1)$$

wherein k is a proportionality factor, l is the longitudinal overall length of the support portion and E is an elastic coefficient, and hence is proportional to the geometrical moment of inertia I. On the other hand, the relation between the thickness td of the support flat portion and the thickness te of the support flat portion and the thickness te of the support corner portion is te>td as apparent from Fig. 3., so that the geometrical moment of inertia is Ie≫Id. As a result, the support corner portion *e* hardly undergoes buckling deformation as compared with the support flat portion *d*. That is, only the support flat portion *d* undergoes buckling deformation.

In case of undergoing buckling deformation, the support corner portion *e* retains a right angle between the adjoining support flat portions because of the resistance to bending deformation along a plane parallel with the shock receiving surface or the bending rigidity in a direction parallel with the shock receiving surface. As shown in Fig. 4, therefore, the opposed support flat portions $d_1$ bulge outward, while the opposed support flat portions $d_2$ dent inward. That is, the support corner portion *e* having a large buckling load cannot prevent buckling of the support portion *c* as a whole, so that the conventional marine fender *a* rapidly changes from a compression elastic deformation region having a high reaction force into a buckling deformation region having a low reaction force, whereby the shock absorbing energy against a vessel becomes reduced.

It is therefore, an aim of the present invention to eliminate or at least mitigate the aforementioned drawbacks of the prior art and to provide a marine fender having a simple structure and a large shock absorbing energy based on a stable deformation.

According to the invention, there is provided a marine fender comprising a hollow tapered body of an elastic material having a relatively small modulus coefficient, either the small-diameter end or the large-diameter end thereof being a shock-receiving end and the other being a fastening end, wherein the thickness of the follow tapered body gradually increases from the large-diameter end toward the small-diameter end, and the hollow tapered body is provided at its outer periphery with a groove formed at a given position near the shock-receiving end, and has a truncated pyramidal form at either the inner surface or the outer surface or both surfaces thereof.

In a preferred embodiment of the invention, the elastic material is rubber, and the follow tapered body has a truncated conical form at the inner surface and a truncated pyramidal form at the outer surface.

According to the invention, the thickness of a hollow tapered body composed of an elastic material having a relatively small modulus coefficient such as rubber gradually increases from a large-diameter end toward a small-diameter end, either the small-diameter end or the large-diameter end being a shock-receiving end and the other being a fastening end. In this case, a compressive reaction force per unit compression deformation in the whole of the marine fender or a so-called compressive spring constant is small when the compressive force is small, and may be made large as the compressive force increases. Therefore, shocks can be readily absorbed at an initial shock-buffering stage, and also the shock-buffering force can gradually be increased as the shock increases.

In the marine fender according to the invention a groove is formed in the outer periphery of the hollow tapered body at a given position near the shock-receiving end. As a result, the distance from the groove to the shock-receiving end is considerably shorter than the longitudinal overall length of the hollow tapered body, so that the buckling load of a hollow tapered body provided with such a groove is considerably larger than that of a hollow tapered body not provided with such a groove as is apparent from the aforementioned equation (1). This means that the buckling reaction force (or force against the buckling load) is large, and contributes to increase the shock absorbing energy.

Further, either the inner surface or the outer surface or both of the hollow tapered body has a truncated pyramidal form, so that when a compressive force is applied to the marine fender, the whole surface of the pyramid is bulged outward to produce a large displacement of the marine fender and consequently the buffering performance is considerably improved. In particular, when the hollow tapered body has a truncated conical form at the inner surface and a truncated pyramidal form at the outer surface thereof, the thickness of the hollow tapered body is approximately uniform in the peripheral direction and gradually changes in the longitudinal axis direction, so that the geometrical moment of inertia I in the hollow tapered body slowly changes without causing a largely local change. During the berthing of a vessel, therefore, the marine fender gradually shifts from a compression elastic deformation region having a high reaction force into a buckling deformation region having a low reaction force through an elastic-buckling transition deformation region having a relatively high reaction force, and consequently the shock absorbing energy against the vessel becomes large. Moreover, since the thickness of the hollow tapered body is gradually changed in the longitudinal axis direction as mentioned above, the stress distribution is slowly changed to prevent stress concentration, and consequently the durability against fatigue is improved and the directional property of the stress concentration is reduced.

The invention will be further described, by way of example only, with reference to the accompanying drawings, wherein:

Fig. 5 is a longitudinal sectional view of one embodiments of a marine fender according to the invention;

Fig. 6 is a transverse sectional view taken along the line VI—VI of Fig. 5;

Figs. 7A to 7G are schematic views illustrating change of the compressed state of the marine fender shown in Fig. 5, respectively; and

Figs. 8 and 9 are longitudinal sectional views of other embodiments of marine fenders according to the invention respectively.

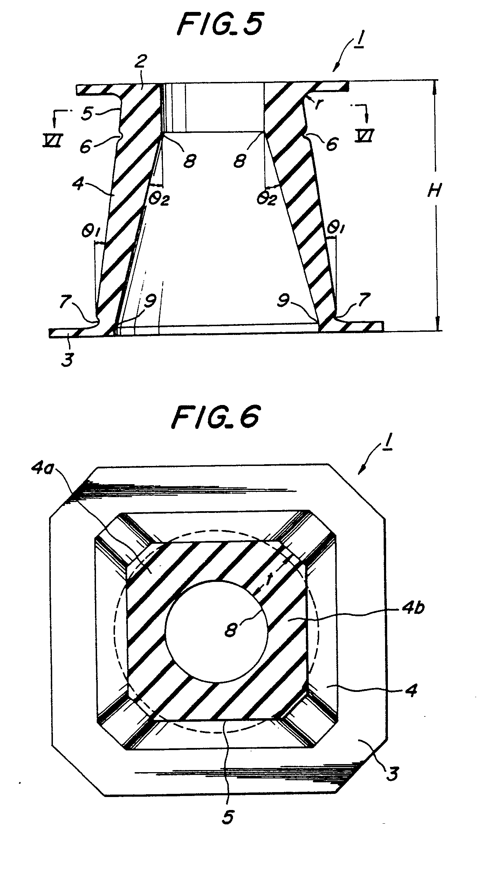

Figs. 5 to 7 show a marine fender 1 comprising a hollow tapered body of a rubber elastomer. The marine fender 1 comprises a shock-receiving portion 2, a fastening portion 3 parallel with the shock-receiving portion 2, and a support portion 4 extending from the fastening portion 3 to the shock-receiving portion 2 in a tapered form. As shown in Figs. 5 and 6, the support portion 4 is hollow in the inside and has a truncated octapyramidal form at the outer surface and a truncated conical form at the inner surface thereof.

That is, when the height from the bottom surface of the fastening portion 3 to the upper surface of the shock-receiving portion 2 is H, the outer surface of the marine fender 1 is shaped into the truncated octapyramidal form over a distance extending from the fastening portion 3 to a shock-receiving base 5 (which is located a distance corresponding to approximately 0.1 H from the upper surface of the shock-receiving portion 2), which is inclined inward at an angle $\theta_1$ of $9°\pm2°$ with respect to a normal line, and extends vertically from the shock-receiving base 5 to the upper surface of the shock-receiving portion 2. Further, an upper groove 6 semicircular in section having a radius of about 0.01—0.15 H is formed in the outer surface of the marine fender 1 over its whole periphery at a position corresponding to a distance of 0.2 H from the upper surface of the shock-receiving portion 2, while a lower groove 7 having substantially the same form and size as the upper groove 6 is formed in the outer surface of the marine fender 1 at a position corresponding to a distance of about 0.1 H from the bottom surface of the fastening portion 3.

The inner surface of the marine fender 1 is shaped into a cylindrical form between the upper surface of the shock-receiving portion 2 and a shock-receiving lower end 8 located a distance corresponding to 0.2 H therefrom and between the bottom surface of the fastening portion 3 and a fastening upper end 9 located a distance corresponding to 0.035 H therefrom. The inner surface of the marine fender is further shaped into a truncated conical form inclined inward at an angle $\theta_2$ of $12.5°\pm2.5°$ with respect to a normal line between the fastening upper end 9 and the shock-receiving lower end 8.

In the marine fender 1, therefore, the thickness of the hollow tapered body gradually increases from the fastening portion 3 toward the shock-receiving portion 2. Moreover, the thickness t of each support corner part 4a of the support portion 4 at a position of the shock-receiving base 5 is arranged to be $0.16\ H \leq t \leq 0.24\ H$.

As shown in Fig. 5, a curved part having a curvature *r* corresponding to 0.03 H—0.05 H is formed in the outer surface of the marine fender 1 at the shock-receiving portion 2 above the shock-receiving base 5.

When the inner surface of the marine fender or the hollow tapered portion has a truncated pyramidal form instead of a truncated conical form, if each of the support corner parts has a certain angle, stress concentrates in the support corner parts and the durability thereof may be adversely affected. Therefore, it is preferable that the support corner part has a certain curvature R. However, if the curvature R is too large the thickness of the support corner part is too thick and hence the deformation against compression becomes small. Considering the above, the optimum range of the curvature R is $0.08\ H \leq R \leq 0.12\ H$.

In the use of a marine fender 1 having the structure as shown in Figs. 5 and 6, the fastening portion 3 is fixed to quay wall or the like (not shown) by means of bolts and nuts (not shown), while a shock receiving member (not shown) comprising a latticed assembly of I-beams and a shock-receiving pad made of a synthetic resin and adhered thereto is bonded to the shock-receiving portion 2.

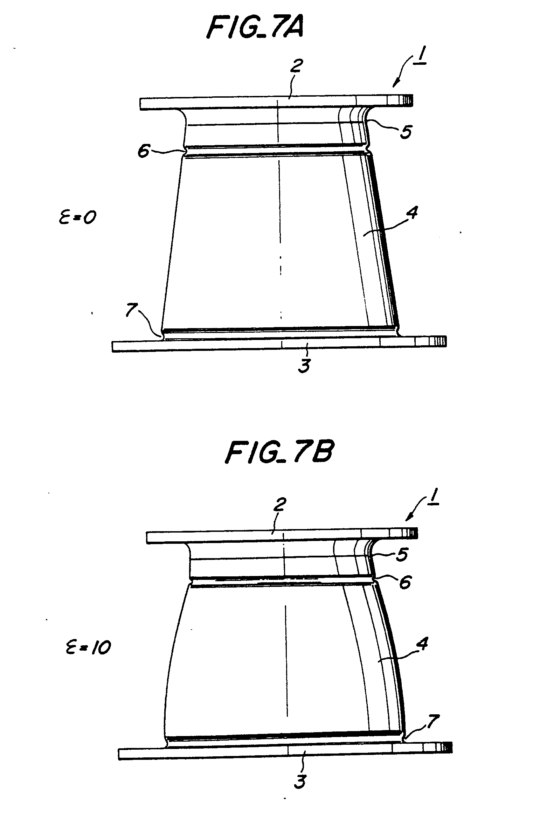

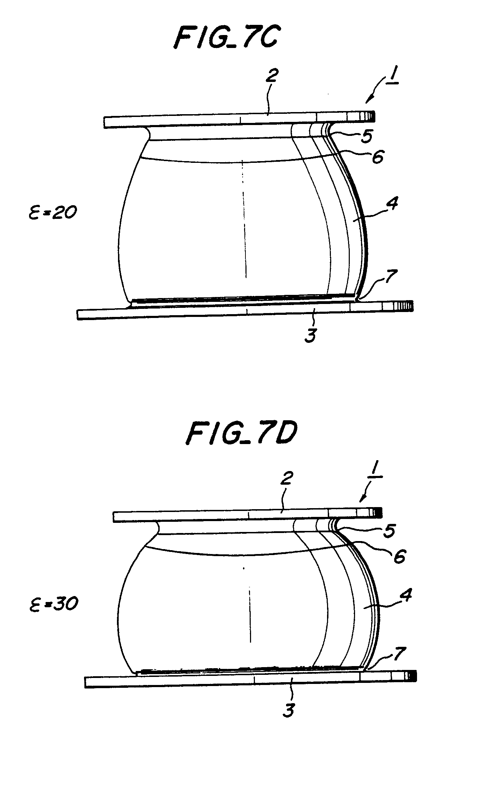

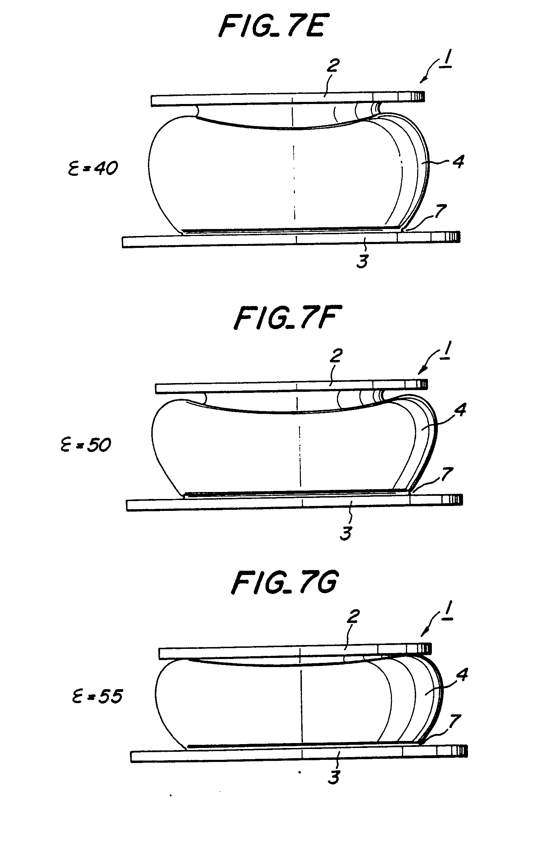

When shock loading is applied to the marine fender 1 through the shock-receiving member during the berthing of a vessel, the marine fender 1 is deformed as shown in Figs. 7A to 7G, wherein Fig. 7A is the case of $\varepsilon=0$, Fig. 7B is the case of $\varepsilon=10$, Fig. 7C is the case of $\varepsilon=20$, Fig. 7D is the case of $\varepsilon=30$, Fig. 7E is the case of $\varepsilon=40$, Fig. 7F is the case of $\varepsilon=50$, and Fig. 7G is the case of $\varepsilon=55$ when the deformation state of the marine fender 1 is indicated by the strain $\varepsilon$ of the marine fender 1 as a parameter. The strain $\varepsilon$ is represented by the equation

$$\varepsilon=\frac{\Delta H}{H}\times 100(\%),$$

wherein $\Delta H$ is the deformation amount of the marine fender 1 subjected to the shock loading.

As apparent from Figs. 7A to 7G, when the strain $\varepsilon$ is as small as about 10, the upper groove 6 is not still closed, but when the strain $\varepsilon$ is more than 20, the upper groove 6 is closed so that the opposed walls thereof closely contact each other and the support portion 4 begins to bulge outward.

Four corner parts 4a of the support portion 4 have a thickness approximately thicker than that of the remaining central parts 4b so that the resistance to bending deformation in a corner part 4a along a plane parallel with the shock-receiving portion 2 or the bending rigidity of the corner part 4a is not so large. Therefore, when the strain $\varepsilon$ changes from 20 to 30 after the beginning of outwardly bulging deformation of the support portion 4, all four central parts 4b undergo bulging deformation without alternately bulging and denting as shown in Fig. 4 to prevent the rapid reduction of compressive spring constant of the marine fender 1, whereby the shock energy can be sufficiently absorbed.

When the strain $\varepsilon$ increases to 40—50 as shown in Figs. 7E and 7F, the support portion 4 further bulges outwardly between the upper groove 6 and the fastening portion 3. On the other hand, a part of the support portion 4 extending between the upper groove 6 and the shock-receiving portion 2 does not undergo outwardly bulging deformation, so that the support portion 4 begins to undergo buckling about the upper groove 6 as a boundary and consequently the shock-receiving portion 2 above the upper groove 6 gradually indents inside the outwardly bulged support portion 4.

Further, when the strain $\varepsilon$ reaches 55, as shown in Fig. 7G, the outer surface of each corner part 4a of the support portion 4 comes into contact with the lower surface of the shock-receiving portion 2, while there is formed a gap between the outer surface of each central part 4b and the lower surface of the shock-receiving portion 2. In this case, the outer surface of the support portion 4 tapered inward at the inclination angle $\theta_1$ changes into an outwardly opposite inclination through the vertical at the base of the support portion 4 having a small thickness as the bulging deformation of the support portion 4 proceeds in accordance with the increase of compression loading, whereby rapid reduction of the compressive spring constant due to the buckling can be suppressed.

In the illustrated embodiment, since the thickness of the support portion 4 gradually increases from the fastening portion 3 toward the shock-receiving portion 2, even if the outer surface of the support portion 4 is tapered inward, the sectional area of the support portion 4 in a plane parallel with the shock-receiving portion 2 does not change much in the longitudinal direction and is approximately settled. As a result, the compression strain against compression loading can be retained substantially uniformly over the whole longitudinal length of the marine fender 1 to effectively absorb the shock energy.

Further, the buckling deformation of the support portion 4 occurs smoothly between the upper and lower grooves 6 and 7 formed in the outer surface of the marine fender 1, so that the buckling length (l) can be shortened to considerably increase the buckling load Pc. Therefore, the shock absorbing energy can be largely increased from the compression elastic deformation region to the buckling deformation region through the buckling transition region.

In the illustrated embodiment, since all of the central parts 4b in the support portion 4 undergo outwardly bulging deformation, the shock buffering force can be obtained stably. Further, since the thickness of the support portion 4 slowly changes in the circumferential direction, stress concentration is avoided to thereby reduce fatigue due to local stress concentration and to thereby improve the durability.

In the marine fender of Figs. 5 to 7, the shock-receiving portion 2 is adjacent to the tapered end of the support portion 4 and the fastening portion 3 is adjacent to the base of the support portion 4. However, the position of the shock-receiving portion and the fastening portion may be reversed compared to the case of Figs. 5 to 7.

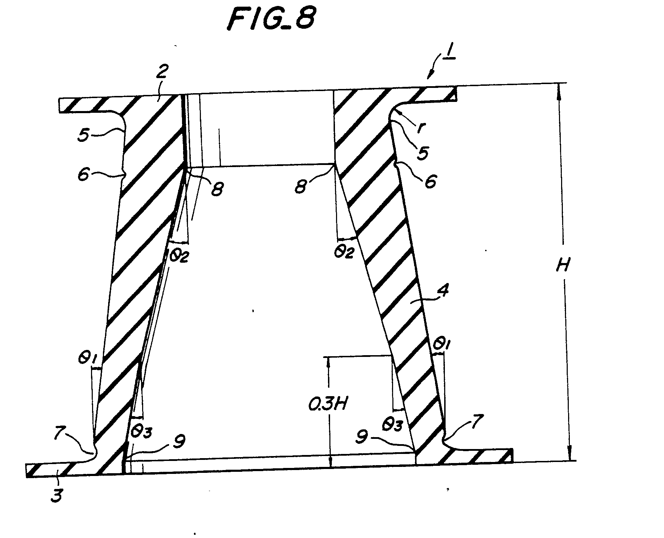

Although the inner surface of the support portion 4 is inclined at the same angle $\theta_2$ in the illustrated embodiment, shown in Fig. 8 it may be inclined at an angle $\theta_3$ smaller by 1°—2° than the angle $\theta_2$ over a region extending from the fastening portion 3 to a position corresponding to 0.3 H.

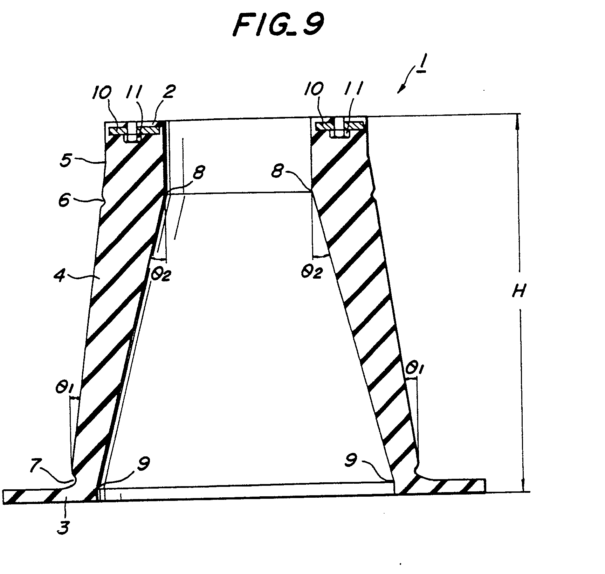

In the illustrated embodiments of Figs. 5 and 8, the shock-receiving portion 2 integrally united with the support portion 4 is provided with a flange protruding outwardly from the support portion 4. As shown in Fig. 9, a perforated iron plate 10 bonded with a nut 11 may be completely embedded in the shock-receiving portion 2 having no flange and a shock-receiving member (not shown) may be attached to the shock-receiving portion 2 through the nuts 11 and bolts (not shown). Alternatively, the perforated iron plate 10 may be embedded in the shock-receiving portion 2 at the same level on the outer surface of the shock-receiving portion 2, or a bolt may be bonded to the perforated iron plate 10 instead of the nut 11.

In the embodiment of Fig. 9, the flange is removed from the shock-receiving portion 2, so that the outer surface of the marine fender 1 never contacts the flange and consequently the compressive spring constant of the marine fender 1 does not increase rapidly, whereby the buffering performance in the berthing of the vessel is further improved.

## Claims

1. A marine fender (1) comprising a hollow tapered body having a truncated pyramidal surface and formed of an elastic material having a relatively small modulus coefficient, either the small-diameter end or the large-diameter end thereof being a shock-receiving end and the other being a fastening end, characterized in that the thickness of the hollow tapered body gradually increases from the large-diameter end toward the small-diameter end, in that the hollow tapered body is provided at its outer periphery with a groove (6) formed near the shock-receiving end, and that either the inner surface or the outer surface or both the surfaces have said truncated pyramidal form.

2. A marine fender as claimed in claim 1, characterized in that the said elastic material is rubber.

3. A marine fender as claimed in claim 1 or 2, characterized in that the hollow tapered body has a truncated pyramidal form at the outer surface and a truncated conical form at the inner surface thereof.

4. A marine fender as claimed in claim 1 or 2, characterized in that the hollow tapered body has a truncated pyramidal form at both the inner and outer surfaces thereof.

5. A marine fender as claimed in any of claims 1 to 4, characterized in that the hollow tapered body is tapered at an inclination angle ($\theta_1$) of $9°\pm2°$ with respect to a normal line at the outer surface and at an inclination angle ($\theta_2$) of $12.5°\pm2.5°$ with respect to a normal line at the inner surface thereof.

6. A marine fender as claimed in any of claims 1 to 4, characterized in that said grooves (6, 7) are formed in the outer surface of the hollow tapered body at positions corresponding to 0.2 H from the upper surface of the small-diameter end and 0.1 H from the lower surface of the large-diameter end respectively, in which H is the distance between the said upper surface and the said lower surface, the said grooves being semicircular in section and having a radius of 0.01 H—0.015 H.

## Patentansprüche

1. Schiffsfender (1) mit einem sich verjüngenden Hohlkörper und einer pyramidenstumpfförmigen Oberfläche aus einem elastischen Material, welches einen relative geringen Modul-Koeffizienten besitzt, von dem Körper entweder der Teil mit kleinen Durchmesser oder der Teil mit großem Durchmesser stoßaufnehmend ist und der andere Teil zur Befestigung dient, dadurch gekennzeichnet, daß die Wandkstärke des Körpers von dem Teil mit großem Durchmesser zu dem Teil mit kleinem Durchmesser zunimmt und der Körper am Umfang mit einer Rille (6) in der Nähe des stoßaufnehmenden Teils versehen ist, und seine innere und/oder äußere Fläche pyramidenstumpfförmig ist (sind).

2. Schiffsfender nach Anspruch 1, dadurch gekennzeichnet, daß das elastische Material Gummi ist.

3. Schiffsfender nach Anspruch 1 oder 2, dadurch gekennzeichnet, daß der Körper außen pyramidenstumpfförmig und innen kegelstumpfförmig ist.

4. Schiffsfender nach Anspruch 1 oder 2, dadurch gekennzeichnet, daß der Körper an der Innen- und der Außerfläche pyramidenstumpfförmig ist.

5. Schiffsfender nach einem der Ansprüche 1 bis 4, dadurch gekennzeichnet, daß der Körper sich in einem Neigungswinkel ($\theta_1$) von $9°\pm2°$ zur Senkrechten zur Außenfläche und in einem Winkel ($\theta_2$) von $12{,}5°\pm2{,}5°$ zur senkrechten zur Innenfläche verjüngt.

6. Schiffsfender nach einem der Ansprüche 1 bis 4, dadurch gekennzeichnet, daß die Rillen (6, 7) in der Außenfläche des Körpers an einer Stelle vorhanden sind entsprechend 0,2 H von der oberen Fläche des Teils mit kleinem Durchmesser bzw. 0,1 H von der unteren Fläche des Teils mit großem Durchmesser, wobei H der Abstand zwischen der oberen und unteren Fläche ist und die Rillen im Querschnitt halbkreisförmig mit einem Radius von 0,01 bis 0,015 H sind.

## Revendications

1. Un amortisseur marin (1) comprenant un corps tronconique creux avec une surface pyramide tronquée et formé d'un matériau élastique possédant un coefficient de module d'élasticité relativement faible, dont l'extrémité de petit diamètre ou l'extrémité de grand diamètre est une extrémité recevant le choc et l'autre une extrémité d'amarrage, caractérisé en ce que l'épaisseur du corps tronconique creux augmente progressivement de l'extrémité de grand diamètre vers l'extrémité de petit diamètre, en ce que le corps tronconique creux est pourvu à sa périphérie extérieure d'une rainure (6) formée au voisinage de l'extrémité recevant le choc et que soit la surface intérieure, en ce que la surface extérieure ou les deux surfaces possèdant ladite forme en pyramide tronquée.

2. Un amortisseur marin selon la revendication 1, caractérisé en ce que ledit matériau élastique est du caoutchouc.

3. Un amortisseur marin selon la revendication 1 ou 2, caractérisé en ce que le corps tronconique creux a une forme en pyramide tronquée à la surface extérieure et une forme en tronc de cône à sa surface intérieure.

4. Un amortisseur marin selon la revendication 1 ou 2, caractérisé en ce que le corps tronconique creux a une forme en pyramide tronquée sur ses deux surfaces, intérieure et extérieure.

5. Un amortisseur marin selon l'une quelconque des revendications 1 à 4, caractérisé en ce que le corps tronconique creux est décroissant suivant un angle d'inclinaison ($\theta_1$) de 9°±2° par rapport à une ligne normale à la surface extérieure et à une angle d'inclinaison ($\theta_2$) de 12,5°±2,5° par rapport à une ligne normale à sa surface intérieure.

6. Un amortisseur marin selon l'une quelconque des revendications 1 à 4, caractérisé en ce que lesdites rainures (6, 7) sont ménagées à la surface extérieure du corps tronconique creux, en des positions correspondant respectivement à 0,2 H de la surface supérieure de l'extrémité de petit diamètre et de 0,1 H de la surface inférieure de l'extrémité de grand diamètre, où H est la distance entre ladite surface supérieure et ladite surface inférieure, lesdites rainures étant de section semi-circulaire et ayant un rayon de 0,01 H—0,015 H.

FIG_1

PRIOR ART

b
a
c
III
III

FIG_2

PRIOR ART

## FIG_3

PRIOR ART

a
te
td

## FIG_4

PRIOR ART

a
e
d2
e
d1
d1
e
e
d2

FIG. 5

1
2
5
6
VI
8
8
r
6
VI
4
θ2
θ2
H
θ1
θ1
7
9
9
7
3

FIG. 6

1
4a
t
4b
8
4
3
5

FIG_7A

1
2
5
6
ε=0
4
7
3


FIG_7B

1
2
5
6
ε=10
4
7
3

FIG_7C

2
1
5
6
ε=20
4
7
3

FIG_7D

2
1
5
6
ε=30
4
7
3

FIG_7E

2
1
ε=40
4
7
3

FIG_7F

2
1
ε=50
4
7
3

FIG_7G

2
1
ε=55
4
7
3

FIG_8
1
2
5
r
5
6
6
8
8
θ2
θ2
H
4
θ1
θ1
0.3H
7
7
θ3
θ3
9
9
3

FIG_9

1
10
11
2
10
11
5
6
8
8
4
θ2
θ2
H
θ1
θ1
7
9
9
3